# EUROPÄISCHE PATENTSCHRIFT

(11) **EP 1 417 425 B1**
(45) Veröffentlichungstag und Bekanntmachung des Hinweises auf die Patenterteilung: **09.02.2005**
(21) Anmeldenummer: 02772149.7
(22) Anmeldetag: 14.08.2002
(51) Int. Cl.: F16H 3/66

(54) **AUTOMATISCH SCHALTBARES FAHRZEUGGETRIEBE**
AUTOMATIC TRANSMISSION FOR MOTOR VEHICLES
TRANSMISSION AUTOMATIQUE POUR VEHICULE A MOTEUR

(30) Priorität: 17.08.2001 DE 10140423
(43) Veröffentlichungstag der Anmeldung: 12.05.2004
(73) Patentinhaber: ZF FRIEDRICHSHAFEN Aktiengesellschaft, 88038 Friedrichshafen (DE)
(72) Erfinder: HEITMANN, Axel, 88045 Friedrichshafen (DE); DREIBHOLZ, Ralf, 88074 Meckenbeuren (DE); GUMPOLTSBERGER, Gerhard, 88045 Friedrichshafen (DE)
(86) Internationale Anmeldenummer: PCT/EP2002/009088
(87) Internationale Veröffentlichungsnummer: WO 2003/016748

(56) Entgegenhaltungen:
- EP-A- 0 370 638
- US-A- 3 853 023
- US-A- 5 106 352

## Beschreibung

Die Erfindung betrifft ein automatisch schaltbares Fahrzeuggetriebe nach dem Oberbegriff des Patentanspruchs 1. Ferner sind Schaltelemente zum Schalten mehrerer Vorwärtsgänge und mindestens eines Rückwärtsganges vorgesehen.

Ein automatisches Mehrgang-Getriebe mit einem mechanischen Schaltgetriebe der vorbeschriebenen Art ist beispielsweise aus der EP 434 525 B1 bekannt. Mit diesem Getriebe sind beispielsweise sechs Vorwärtsgänge und ein Rückwärtsgang schaltbar.

In Ergänzung zu dem vorgenannten Automatikgetriebe ist außerdem ein Getriebe mit einer als Starter/Generator ausgebildeten Elektromaschine beschrieben (VDI-Berichte Nr. 1610, 2001, Seiten 455 bis 479, "E-Automat, Automatikgetriebe mit Esprit", Professor Dr. P. Tenberge, Chemnitz), welches zum Schalten von sieben Vorwärtsgängen und einem Rückwärtsgang sowie zum stufenlosen Verändern der Übersetzung in fünf Vorwärtsfahrbereichen vorgesehen ist. Dabei wird in den durch Wegfall des hydrodynamischen Wandlers gewonnenen Platz nun anstelle des Wandlers eine Elektromaschine eingesetzt. Der Anfahrvorgang kann dadurch auf drei verschiedene Arten erfolgen, nämlich rein elektromotorisch oder durch die Verbrennungskraftmaschine mit einer weiteren Bremse als Anfahrelement oder durch die Verbrennungskraftmaschine zusammen mit der Elektromaschine, welche in diesem Fall die Funktion der Bremse übernimmt. Durch Hinzufügen einer Steuereinheit sowie einer Speicherbatterie werden Zusatznutzen erworben, welche in einem komfortablen Start-/Stop-Betrieb, einem teilweise möglichen stufenlosen Fahrbetrieb mit elektrischem Booster, der möglichen Energie-Rekuperation beim Bremsen sowie einem rein elektrischen, emissionsfreien Betrieb liegen. Bei dem vorgenannten E-Automat sind die Verbrennungskraftmaschine und die E-Maschine über einen Planetenradsatz miteinander gekoppelt, so daß der Planetenradsatz das Drehmomentverhältnis der beiden Antriebsaggregate festlegt.

Aufgabe der vorliegenden Erfindung ist es, eine weitere Verschaltungsmöglichkeit für mechanische Schaltgetriebe anzugeben und damit ein Getriebe mit mehr Gangstufen und geringem Bauaufwand zu ermöglichen.

Diese Aufgabe wird durch ein automatisch schaltbares Fahrzeuggetriebe der vorgenannten Art mit den Merkmalen des Anspruchs 1 erreicht. Erfindungsgemäß wird ein weiteres Schaltelement zur Verbindung eines Rades des ersten Planetenradsatzes mit einem zweiten Rad des ersten Planetenradsatzes vorgeschlagen. Durch Schließen dieses zusätzlichen Schaltelements, beispielsweise einer Kupplung, gelingt es, das erste Planetengetriebe zu verblocken, so daß vorteilhafterweise zwei zusätzliche Vorwärts- sowie ein zusätzlicher Rückwärtsgang schaltbar sind. Daduch sind mit dem erfindungsgemäßen Getriebe neun Vorwärts- und zwei Rückwärtsgangstufen realisierbar.

Mittels des weiteren Schaltelements ist das Sonnenrad des ersten Planetenradsatzes mit dem Hohlrad des ersten Planetenradsatzes verbindbar. Dadurch wird vorteilhafterweise der erste Planetenradsatz verblockt, so daß die Abtriebsdrehzahl des ersten Planetenradsatzes der Antriebsdrehzahl entspricht und der erste Planetenradsatz die Übersetzung i = 1 aufweist.

In einer vorteilhaften Weiterbildung der Erfindung wird vorgeschlagen, das Sonnenrad mit einer Sonnenradwelle und das Hohlrad mit einer Hohlradwelle zu verbinden, so daß mittels des weiteren Schaltelements die Sonnenradwelle mit der Hohlradwelle des ersten Planetenradsatzes verbindbar ist.

Vorteilhafterweise ist die Hohlradwelle des ersten Planetenradsatzes mit der Antriebswelle des Fahrzeuggetriebes verbunden, so daß ein direkter Antrieb der Hohlradwelle und somit eine einfachere Bauweise des ersten Planetenradsatzes angegeben ist.

Das weitere Schaltelement kann vorteilhafterweise sowohl als Lamellenkupplung als auch als formschlüssige Kupplung oder als Freilauf ausgebildet sein.

Durch die Anordnung des weiteren Schaltelements koaxial zur Hohlradwelle und/oder zur Sonnenradwelle sowie durch die axiale Anordnung des Schaltelements zwischen der Eingangswelle und dem ersten Planetenradsatz ist eine raumsparende und kostengünstige Anordnung des Schaltelements vorgeschlagen.

Weitere Ziele, Vorteile und Ausgestaltungen der Erfindung ergeben sich aus der nachfolgenden Beschreibung des Ausführungsbeispiels. Dabei bilden alle beschriebenen und/oder bildlich dargestellten Merkmale für sich oder auch in beliebiger sinnvoller Kombination den Gegenstand der Erfindung, unabhängig von ihrer Zusammenfassung in den Ansprüchen und deren Rückbeziehung.

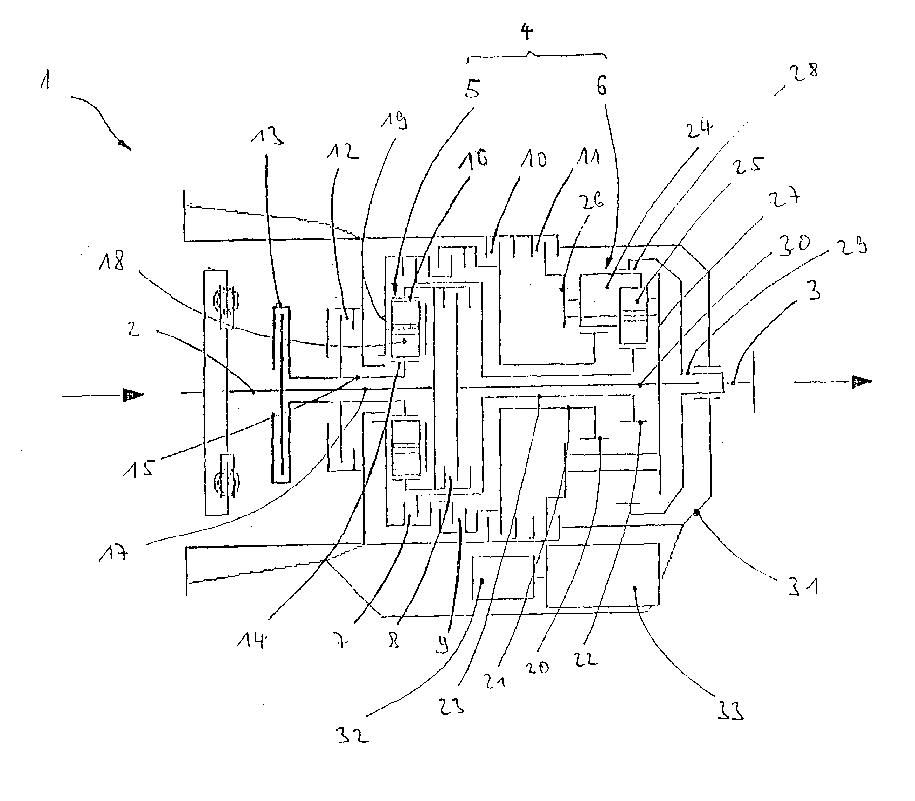

Die einzige Figur zeigt ein automatisch schaltbares Fahrzeuggetriebe 1 gemäß der vorliegenden Erfindung. Dieses Getriebe 1 besteht im wesentlichen aus einer Antriebswelle 2, welche eingangsseitig beispielsweise über einen Torsionsdämpfer mit einer nicht dargestellten Verbrennungskraftmaschine in Verbindung steht. Ausgangsseitig ist eine Abtriebswelle 3 vorgesehen, welche mit mindestens einer Fahrzeugachse verbindbar ist. Zwischen den beiden Wellen 2 und 3 ist ein Schaltgetriebe 4 angeordnet, welches aus einer ersten Getriebestufe 5 und einer zweiten Getriebestufe 6 mit mehreren Kupplungen 7, 8, 9 und Bremsen 10 und 11 besteht. Die erste Getriebestufe 5 wird beispielsweise gebildet aus einem einfachen Planetenradsatz, welcher einem Doppel-Planetenradsatz, insbesondere einem Ravigneaux-Satz, als zweite Getriebestufe 6 vorgeschaltet ist. Eine derartige Anordnung ermöglicht beispielsweise ein Stufen-Automatikgetriebe mit sechs Vorwärtsgängen und einem Rückwärtsgang.

Das Sonnenrad 14 des ersten Planetenradsatzes 5 ist über eine Sonnenradwelle 15 mit einer Anfahrbremse 12 verbunden, so daß ein mit diesem Getriebe 1 ausgerüstetes Fahrzeug ohne hydrodynamischen Wandler anfahren kann. Das Hohlrad 16 des ersten Planetenradsatzes 5 ist über eine Hohlradwelle 17 mit der Antriebswelle 2 des Fahrzeuggetriebes 1 ständig verbunden. Die Planetenräder 18 sind an einem Planetenträger 19 drehbar gelagert, welche über Kupplungen 7, 8, 9 mit dem zweiten Planetenradsatz 6 verbunden oder über die erste Bremse 10 mit dem Gehäuse 31 verblockt werden kann.

Zwischen der Antriebswelle 2 und dem ersten Planetenradsatz 5 ist erfindungsgemäß ein weiteres Schaltelement, beispielsweise eine vierte Kupplung 13, vorgesehen. Mit dieser Kupplung 13 kann die Sonnenradwelle 15 direkt mit der Hohlradwelle 17 verbunden und somit der erste Planetenradsatz 5 verblockt werden. Dadurch ist mit dem Schaltelement 13 ein Übersetzungsverhältnis i = 1 an dem ersten Planetenradsatz 5 einstellbar.

Der zweite Planetenradsatz 6 besteht im wesentlichen aus einem ersten Sonnenrad 20 mit einer ersten Sonnenradwelle 21 sowie einem zweiten Sonnenrad 22 mit einer zweiten Sonnenradwelle 23. Ein Satz erster Planetenräder 24 ist an einem ersten Planetenträger 26 gelagert und durch die Bremse 11 mit dem Gehäuse 31 verblockbar. Der Satz zweiter Planetenräder 25 ist an einem zweiten Planetenträger 27 gelagert und durch eine Zwischenwelle 30 sowie die Kupplung 8 mit dem ersten Planetenradsatz 5 verbindbar. Das Hohlrad 28 des zweiten Planetenradsatzes 6 ist über eine Hohlradwelle 29 mit der Abtriebswelle 3 des Fahrzeuggetriebes 1 verbunden.

Durch Schließen des Schaltelements 13 läuft der erste Planetenradsatz 5 im Block um, so daß durch die Kombination des ersten und zweiten Planetengetriebes 5, 6 zwei zusätzliche Vorwärts- und ein zusätzlicher Rückwärtsgang schaltbar sind, wobei mit dem erfindungsgemäßen Getriebe nun vorteilhafterweise neun Vorwärts- und zwei Rückwärtsgänge realisierbar sind.

### Bezugszeichen

- 1: Fahrzeuggetriebe
- 2: Antriebswelle
- 3: Abtriebswelle
- 4: Schaltgetriebe
- 5: erster Planetenradsatz
- 6: zweiter Planetenradsatz
(Ravigneaux-Satz)
- 7: Schaltelement, erste Kupplung
- 8: Schaltelement, zweite Kupplung
- 9: Schaltelement, dritte Kupplung
- 10: Schaltelement, erste Bremse
- 11: Schaltelement, zweite Bremse
- 12: Schaltelement, dritte Bremse
- 13: Schaltelement, vierte Kupplung
- 14: Sonnenrad
- 15: Sonnenradwelle
- 16: Hohlrad
- 17: Hohlradwelle
- 18: Planetenrad
- 19: Planetenträger
- 20: erstes Sonnenrad
- 21: erste Sonnenradwelle
- 22: zweites Sonnenrad
- 23: zweite Sonnenradwelle
- 24: erstes Planetenrad
- 25: zweites Planetenrad
- 26: erster Planetenträger
- 27: zweiter Planetenträger
- 28: Hohlrad
- 29: Hohlradwelle
- 30: Zwischenwelle
- 31: Gehäuse
- 32: Pumpe
- 33: Elektromotor

## Patentansprüche

1. Automatisch schaltbares Fahrzeuggetriebe (1) mit einer Antriebswelle (2), welche mit einer Verbrennungskraftmaschine verbindbar ist, und einer mit wenigstens einer Fahrzeugachse verbindbaren Abtriebswelle (3), einem mechanischen Schaltgetriebe (4) mit einem ersten und einem zweiten Planetenradsatz (5, 6) sowie mehreren Schaltelementen (7, 8, 9, 10, 11, 12), wobei der erste Planetenradsatz (5) ein einfacher Planetenradsatz ist und diesem ein doppelter Planetenradsatz, nämlich ein Ravigneaux-Satz, als zweiter Planetenradsatz (6) nachgeschaltet ist, **dadurch gekennzeichnet, daß** ein weiteres Schaltelement (13) zur Verbindung einer ersten Welle des ersten Planetenradsatzes (5) mit einer zweiten Welle des ersten Planetenradsatzes (5) vorgesehen ist.

2. Automatisch schaltbares Fahrzeuggetriebe (1) nach Anspruch 1, **dadurch gekennzeichnet, daß** mittels des weiteren Schaltelements (13) das Sonnenrad (14) des ersten Planetenradsatzes (5) mit dem Hohlrad (16) des ersten Planetenradsatzes (5) verbindbar ist.

3. Automatisch schaltbares Fahrzeuggetriebe (1) nach Anspruch 1 oder 2, **dadurch gekennzeichnet, daß** das Sonnenrad (14) mit einer Sonnenradwelle (15) und das Hohlrad (16) mit einer Hohlradwelle (17) verbunden und mittels des weiteren Schaltelements (13) die Sonnenradwelle (15) mit der Hohlradwelle (17) verbindbar ist.

4. Automatisch schaltbares Fahrzeuggetriebe (1) nach Anspruch 3, **dadurch gekennzeichnet, daß** die Hohlradwelle (17) des ersten Planetenradsatzes (5) mit der Antriebswelle (2) verbunden ist.

5. Automatisch schaltbares Fahrzeuggetriebe (1) nach einem der Ansprüche 1 bis 4, **dadurch gekennzeichnet, daß** das weitere Schaltelement (13) als Lamellenkupplung ausgebildet ist.

6. Automatisch schaltbares Fahrzeuggetriebe (1) nach einem der Ansprüche 1 bis 4, **dadurch gekennzeichnet, daß** das weitere Schaltelement (13) als formschlüssige Kupplung ausgebildet ist.

7. Automatisch schaltbares Fahrzeuggetriebe (1) nach einem der Ansprüche 1 bis 4, **dadurch gekennzeichnet, daß** das weitere Schaltelement (13) als Freilauf ausgebildet ist.

8. Automatisch schaltbares Fahrzeuggetriebe (1) nach einem der vorangehenden Ansprüche, **dadurch gekennzeichnet, daß** das weitere Schaltelement (13) koaxial zur Hohlradwelle (17) und/oder zur Sonnenradwelle (15) und in axialer Richtung zwischen der Antriebswelle (2) und dem ersten Planetenradsatz (5) angeordnet ist.

## Claims

1. Automatically shiftable vehicle transmission (1) having an input shaft (2), which is connectable to an internal combustion engine, an output shaft (3) connectable to at least one vehicle axle, a mechanical shift transmission (4) comprising a first and a second planet gear set (5, 6) as well as a plurality of shift elements (7, 8, 9, 10, 11, 12), wherein the first planet gear set (5) is a single planet gear set having downstream thereof a double planet gear set, namely a Ravigneaux set, as second planet gear set (6), **characterized in that** a further shift element (13) is provided for connecting a first shaft of the first planet gear set (5) to a second shaft of the first planet gear set (5).

2. Automatically shiftable vehicle transmission (1) according to claim 1, **characterized in that** by means of the further shift element (13) the sun wheel (14) of the first planet gear set (5) is connectable to the ring gear (16) of the first planet gear set (5).

3. Automatically shiftable vehicle transmission (1) according to claim 1 or 2, **characterized in that** the sun wheel (14) is connected to a sun gear shaft (15) and the ring gear (16) is connected to a ring gear shaft (17) and by means of the further shift element (13) the sun gear shaft (15) is connectable to the ring gear shaft (17).

4. Automatically shiftable vehicle transmission (1) according to claim 3, **characterized in that** the ring gear shaft (17) of the first planet gear set (5) is connected to the input shaft (2).

5. Automatically shiftable vehicle transmission (1) according to one of claims 1 to 4, **characterized in that** the further shift element (13) takes the form of a multi-plate clutch.

6. Automatically shiftable vehicle transmission (1) according to one of claims 1 to 4, **characterized in that** the further shift element (13) takes the form of a positive clutch.

7. Automatically shiftable vehicle transmission (1) according to one of claims 1 to 4, **characterized in that** the further shift element (13) takes the form of a free-wheel unit.

8. Automatically shiftable vehicle transmission (1) according to one of the preceding claims, **characterized in that** the further shift element (13) is disposed coaxially with the ring gear shaft (17) and/or the sun gear shaft (15) and in axial direction between the input shaft (2) and the first planet gear set (5).

## Revendications

1. Boîte de vitesse automatique (1) avec un arbre d'entrée (2) pouvant être relié à un moteur à combustion interne et un arbre de sortie (3) pouvant être relié à au moins un axe du véhicule, une boîte de vitesse à enclenchement mécanique (4) avec un premier train d'engrenage épicycloïdal et un second train d'engrenage épicycloïdal (5, 6) ainsi que plusieurs éléments d'enclenchement (7, 8, 9, 10, 11, 12), le premier train d'engrenage épicycloïdal (5) étant un simple train d'engrenage épicycloïdal et un double train d'engrenage épicycloïdal, à savoir un train d'engrenage de Ravigneaux, étant branché en aval de celui-ci, en tant que second train d'engrenage épicycloïdal (6), **caractérisée en ce qu'**un élément d'enclenchement supplémentaire (13) est prévu pour relier un premier arbre du premier train d'engrenage épicycloïdal (5) avec un deuxième arbre du premier train d'engrenage épicycloïdal (5).

2. Boîte de vitesse automatique (1) selon la revendication 1, **caractérisée en ce que**, à l'aide de l'élément d'enclenchement supplémentaire (13), la roue planétaire (14) du premier train d'engrenage épicycloïdal (5) peut être reliée à la couronne à la roue à denture intérieure (16) du premier train d'engrenage épicycloïdal (5).

3. Boîte de vitesse automatique (1) selon la revendication 1 ou 2, **caractérisée en ce que** la roue planétaire (14) est reliée à un arbre de roue planétaire (15) et la roue à denture intérieure (16) est reliée à un arbre de roue à denture intérieure (17), et l'arbre de roue planétaire (15) et l'arbre de roue à denture intérieure (17) peuvent être reliés à l'aide de l'élément d'enclenchement supplémentaire (13).

4. Boîte de vitesse automatique (1) selon la revendication 3, **caractérisée en ce que** l'arbre de la roue à denture intérieure (17) du premier train d'engrenage épicycloïdal (5) est relié à l'arbre d'entrée (2).

5. Boîte de vitesse automatique (1) selon l'une des revendications 1 à 4, **caractérisée en ce que** l'élément d'enclenchement supplémentaire (13) est conçu comme un embrayage à disques.

6. Boîte de vitesse automatique (1) selon l'une des revendications 1 à 4, **caractérisée en ce que** l'élément d'enclenchement supplémentaire (13) est conçu comme un embrayage à complémentarité de forme.

7. Boîte de vitesse automatique (1) selon l'une des revendications 1 à 4, **caractérisée en ce que** l'élément d'enclenchement supplémentaire (13) est conçu comme une roue libre.

8. Boîte de vitesse automatique (1) selon l'une des revendications précédentes, **caractérisée en ce que** l'élément d'enclenchement supplémentaire (13) est coaxial par rapport à l'arbre de la roue à denture intérieure (17) et/ou par rapport à l'arbre de la roue planétaire (15) et disposé, dans la direction axiale, entre l'arbre d'entrée (2) et le premier train d'engrenage épicycloïdal (5).
